(19) Europäisches Patentamt
European Patent Office
Office européen des brevets

(11) **EP 2 160 371 B1**

(12) **FASCICULE DE BREVET EUROPEEN**

(45) Date de publication et mention de la délivrance du brevet:
**14.11.2012 Bulletin 2012/46**

(21) Numéro de dépôt: **08805998.5**

(22) Date de dépôt: **13.06.2008**

(51) Int Cl.:
*C04B 35/486* (2006.01)    *C04B 35/443* (2006.01)
*C04B 35/505* (2006.01)    *C04B 35/64* (2006.01)
*F41G 11/00* (2006.01)    *F42B 15/01* (2006.01)

(86) Numéro de dépôt international:
**PCT/FR2008/051063**

(87) Numéro de publication internationale:
**WO 2009/004230 (08.01.2009 Gazette 2009/02)**

(54) **PRODUIT FRITTE DE STRUCTURE CUBIQUE**

SINTERPRODUKT MIT KUBISCHEM AUFBAU

SINTERED PRODUCT WITH A CUBIC STRUCTURE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **15.06.2007 FR 0704307**

(43) Date de publication de la demande:
**10.03.2010 Bulletin 2010/10**

(73) Titulaire: **Saint-Gobain Centre de Recherches et d'Etudes**
**Européen**
**92400 Courbevoie (FR)**

(72) Inventeurs:
• **BERNARD-GRANGER, Guillaume**
**F-84380 Mazan (FR)**
• **BENAMEUR, Nassira**
**F-84150 Jonquieres (FR)**

(74) Mandataire: **Tanty, François**
**Cabinet Nony**
**3, rue de Penthièvre**
**75008 Paris (FR)**

(56) Documents cités:
**US-A- 4 758 541    US-A1- 2003 183 806**

**Description**

La présente invention concerne un nouveau produit fritté, notamment pour fabriquer des fenêtres de visée en température, des dômes de missiles ou des blindages transparents, ainsi qu'un procédé de fabrication d'un tel produit.

Dans ces applications, les produits doivent être le plus transparents possible dans les domaines du visible et/ou de l'infrarouge et/ou du haut ultra violet.

Le saphir est connu pour présenter une bonne transparence dans les longueurs d'onde du haut de l'ultra violet (0,2 -0,4 $\mu$m), du visible (0,4 - 0,8 $\mu$m) et dans l'infrarouge proche et moyen (0,8 à 5 $\mu$m). La transparence du saphir est cependant mauvaise au-delà de 5 $\mu$m. De plus, son coût est prohibitif.

Des laboratoires de recherche ont donc cherché à synthétiser des produits transparents. Parmi ces produits, on distingue classiquement les produits fondus et coulés et les produits frittés.

A la différence des produits frittés, les produits fondus et coulés comportent le plus souvent une phase vitreuse intergranulaire reliant des grains cristallisés. Les problèmes posés par les produits frittés et par les produits fondus et coulés, et les solutions techniques adoptées pour les résoudre, sont donc généralement différents. Une composition mise au point pour fabriquer un produit fondu et coulé n'est donc pas *a priori* utilisable telle quelle pour fabriquer un produit fritté, et réciproquement.

Parmi les produits frittés, on connaît les produits d'alumine pure ou contenant des dopants, par exemple de EP 1 053 983, de WO 2004/007398 et de FR 2886289. Leur transparence dans le domaine du visible pour des longueurs d'onde inférieures à 0,6 $\mu$m et leur transparence dans l'infrarouge pour des longueurs d'onde supérieures à 5 $\mu$m sont cependant limitées.

On connaît également les produits transparents de structure cubique. En particulier, l'aluminate de magnésium, l'aluminate de lithium, l'aluminate d'yttrium, l'oxyde de magnésium et l'oxyde de zinc sont connus de US 3,767,745. Aucune valeur de transparence n'est donnée.

Des produits de spinelle $MgAl_2O_4$ sont également connus, par exemple de US 5,001,093 et de US 5,152,940.

Par ailleurs, la possibilité d'obtenir des produits de zircone cubique stabilisée à l'oxyde d'yttrium présentant une haute transparence grâce à l'ajout d'oxyde de titane seul, dans des proportions de 10 mol%, est décrite dans « Transparent TiO2-Y2O3-ZrO2 ceramics » - Advances in ceramics, vol 24, science and technology of zirconia III, 1988, p287-291. La transmittance, mesurée sur des échantillons d'épaisseur de 0,73 mm, est faible et maximale pour une taille de grains de 150 $\mu$m.

Des produits d'oxyde d'yttrium pur sont également connus, par exemple de US 5,004,712 ou de US 2004/0159984. Des produits d'oxyde d'yttrium dopé à l'oxyde de lanthane (US 4,115,134), à l'alumine (US 4,166,831, US 4,098,612), ou à l'oxyde de titane (US 5,308,809) sont également connus. La taille moyenne des grains des produits à base d'oxyde d'yttrium est en général supérieure à 10 $\mu$m et souvent supérieure à 100 $\mu$m. Bien que ces produits présentent une bonne transparence dans le domaine de l'infrarouge, la transparence dans le domaine du visible est parfois faible.

EP 1 557 402 décrit encore une céramique polycristalline transparente de structure cubique, de taille de grains comprise entre 60 nm et 10 $\mu$m. Ces produits présentent une transmittance en ligne (RIT) supérieure à 75% de la RIT théorique desdits produits pour une longueur d'onde comprise entre 0,6 $\mu$m et 0,650 $\mu$m. Aucune autre information concernant les valeurs de RIT pour d'autres domaines de longueurs d'ondes n'est disponible, en particulier pour des longueurs d'ondes comprises entre 0,2 et 0,6 $\mu$m.

Il existe donc un besoin pour un produit d'un coût réduit présentant une bonne transparence en particulier dans les domaines du visible et/ou du haut ultra violet.

Un but de l'invention est de satisfaire ce besoin.

Selon l'invention, on atteint ce but au moyen d'un produit fritté comportant :

- plus de 99,5 %, en pourcentage massique sur la base des oxydes, d'un matériau, appelé « matériau de structure cubique », présentant, pour plus de 95% de sa masse, une structure cristallographique cubique, et présentant un indice de réfraction inférieur à 2,75 dans le domaine de longueurs d'onde compris entre 0,2 $\mu$m et 5 $\mu$m, et
- plus de 50 ppma et moins de 500 ppma de dopants, ces dopants comprenant nécessairement l'oxyde de titane $TiO_2$ et au moins un dopant additionnel choisi parmi $ZrO_2$, CaO, et MgO, ledit au moins un dopant additionnel étant différent du ou des oxyde(s) constituant ledit matériau de structure cubique, MgO pouvant cependant être un dopant additionnel lorsque le matériau de structure cubique est du spinelle $MgAl_2O_4$.

De manière surprenante, les inventeurs ont découvert que l'ajout simultané de $TiO_2$ et d'un dopant choisi parmi $ZrO_2$, CaO, MgO et leurs mélanges améliore la transparence, notamment dans les domaines-du visible et du haut ultra violet, tout en améliorant les propriétés de résistance mécanique, notamment la résistance en flexion trois points. Les produits ainsi obtenus sont particulièrement adaptés à des applications de blindages transparents et de dômes de missiles.

Le matériau de structure cubique est choisi pour présenter un indice de réfraction inférieur à 2,75 dans le domaine de longueurs d'onde compris entre 0,2 $\mu$m et 5 $\mu$m. Ce critère permet de sélectionner les matériaux de structure cubique présentant une transmittance en ligne IT supérieure à 64%, valeur considérée comme limite inférieure pour les applications visées. Les indices de réfraction des matériaux de structure cubique sont connus ou peuvent être mesurés par des expériences de routine.

Le matériau de structure cubique peut être notamment choisi parmi le spinelle $MgAl_2O_4$, la zircone ($ZrO_2$), le YAG ($Y_3Al_5O_{12}$). Ces matériaux présentent de bonnes propriétés mécaniques et une bonne transparence pour les longueurs d'onde du visible (0,4 à 0,8 $\mu$m) et de l'infra rouge (0,8 à 5 $\mu$m), ce qui les rend avantageusement utilisables comme blindages transparents, fenêtres de visée en température et dômes de missiles. Le YAG présente en outre l'avantage d'une bonne transparence pour des longueurs d'ondes supérieures à 5 $\mu$m, et notamment pour une longueur d'onde de 7 $\mu$m.

Dans un mode de réalisation préféré, le matériau de structure cubique est la zircone ($ZrO_2$) stabilisée sous forme cubique par de l'oxyde d'yttrium. De préférence la zircone stabilisée sous forme cubique contient au moins 8% molaire d'oxyde d'yttrium ($Y_2O_3$), de préférence encore environ 10% molaire d'oxyde d'yttrium.

La teneur totale en dopants est inférieure à 500 ppma, de préférence inférieure à 400 ppma, de préférence encore inférieure à 200 ppma. Avantageusement, on limite ainsi les risques de précipitation aux joints de grains, une telle précipitation pouvant conduire à une interaction avec le rayonnement incident et diminuer les performances optiques du produit.

De préférence toujours, la teneur totale en dopants est cependant supérieure à 100 ppma pour que l'effet sur la transparence soit plus marqué.

Le dopant $TiO_2$ peut être utilisé sous la forme rutile ou anatase, en particulier sous la forme rutile.

Les dopants additionnels $ZrO_2$, CaO, et MgO doivent être différents du ou des oxydes du matériau de structure cubique, indépendamment de la structure cristallographique de ces oxydes. Autrement dit, si le matériau cubique est de la zircone cubique, le dopant additionnel ne peut pas être de la zircone, même sous forme monoclinique par exemple. La seule exception est MgO, qui peut être un dopant additionnel du spinelle $MgAl_2O_4$.

Les teneurs respectives en dopants les plus avantageuses pour obtenir une transparence utile dans les applications mentionnées en introduction sont les suivantes.

Lorsque les dopants utilisés sont $TiO_2$ et $ZrO_2$, le rapport atomique $TiO_2/ZrO_2$ est de préférence compris entre 5/95 et 95/5, de préférence compris entre 40/60 et 60/40, de préférence encore sensiblement égal à 1.

Lorsque la zircone est utilisée comme un des dopants additionnels, elle est de préférence stabilisée, de préférence encore stabilisée à l'oxyde d'yttrium, de préférence toujours, stabilisée à au moins 3 % molaire d'oxyde d'yttrium ($Y_2O_3$). Lorsque les dopants utilisés sont $TiO_2$ et CaO, le rapport atomique $TiO_2/CaO$ est de préférence compris entre 5/95 et 95/5, de préférence compris entre 45/55 et 55/45 ou entre 37/63 et 63/37, de préférence encore sensiblement égal à 1 ou 1,5.

Lorsque les dopants utilisés sont $TiO_2$ et MgO, le rapport atomique $TiO_2/MgO$ est de préférence compris entre 5/95 et 95/5, de préférence compris entre 40/60 et 60/40, de préférence encore sensiblement égal à 1.

La teneur en $TiO_2$ est de préférence supérieure à 25 ppma, de préférence supérieure à 50 ppma et/ou inférieure à 300 ppma, de préférence inférieure à 250 ppma, de préférence inférieure à 200 ppma, de préférence inférieure à 150 ppma, de préférence encore inférieure à 100 ppma.

Le complément à 100% de la composition du produit selon l'invention est de préférence constitué par des impuretés, c'est-à-dire des espèces introduites nécessairement et involontairement dans la charge de départ avec les poudres de matériau de structure cubique et de dopants ou de précurseurs de ces derniers, ainsi que lors des différentes étapes du procédé.

Dans les modes de réalisation préférés, le produit selon l'invention présente une densité supérieure à 99,9%, de préférence supérieure à 99,95% de la densité théorique du mélange du matériau de structure cubique et des dopants. La transparence en est encore améliorée.

Par ailleurs, la transparence du produit selon l'invention peut encore être considérablement améliorée en faisant subir à ce produit une recuisson (en anglais « annealing ») adaptée, de manière connue en soi, pour diminuer le nombre de lacunes d'oxygène. L'invention concerne ainsi un produit de structure cubique dopé fritté selon l'invention ayant subi une telle recuisson, quel que soit le procédé utilisé pour fabriquer le produit selon l'invention, ainsi qu'un procédé de fabrication d'un produit selon l'invention comportant une étape de recuisson apte à diminuer le nombre de lacunes d'oxygène. Cette recuisson est de préférence effectuée sous atmosphère d'air ou sous atmosphère d'oxygène, de préférence encore sous atmosphère d'air. On entend par « atmosphère d'oxygène », toute atmosphère contenant plus de 99% en volume d'oxygène. Elle se traduit sur le produit par une diminution de la quantité de lacunes d'oxygène et par une amélioration remarquable de la transmittance en ligne (IT, ou, en anglais « In Line Transmittance », mesurée ici sur un échantillon d'épaisseur de 1,3 mm).

Le produit de structure cubique selon l'invention présente ainsi, selon des caractéristiques préférées,

- une transmittance en ligne (IT), pour une longueur d'onde du rayonnement incident de 0,3 $\mu$m, supérieure à 65% de la transmittance en ligne théorique (IT$_{théorique}$), de préférence supérieure à 75% de la transmittance en ligne théorique, de préférence supérieure à 85% de la transmittance en ligne théorique, de préférence encore supérieure à 95% de la transmittance en ligne théorique et/ou
- une transmittance en ligne (IT) à 0,6 $\mu$m supérieure à 75% de la transmittance en ligne théorique, de préférence supérieure à 85% de la transmittance en ligne théorique, de préférence supérieure à 94% de la transmittance en ligne théorique, de préférence encore supérieure à 96% de la transmittance en ligne théorique, et/ou
- une transmittance en ligne (IT) à 4 $\mu$m supérieure à 92% de la transmittance en ligne théorique, de préférence supérieure à 95% de la transmittance en ligne théorique, de préférence supérieure à 97% de la transmittance en ligne théorique, de préférence encore supérieure à 99% de la transmittance en ligne théorique,

les valeurs de transmittance en ligne étant mesurées sur des échantillons d'épaisseur 1,3 mm et les valeurs de transmittance en ligne théorique (IT$_{théorique}$) étant les valeurs calculées pour le matériau de structure cubique constituant le produit de l'invention sous une forme pure et monocristalline.

Dans le cas où le produit selon l'invention est un produit de spinelle MgAl$_2$O$_4$ dopé, il peut présenter :

- une transmittance en ligne (IT) à 0,3 $\mu$m, supérieure à 55,7%, de préférence supérieure à 64,2%, de préférence supérieure à 72,8%, de préférence encore supérieure à 81,4% et/ou
- une transmittance en ligne (IT) à 0,6 $\mu$m supérieure à 65,3%, de préférence supérieure à 74%, de préférence supérieure à 81,8%, de préférence encore supérieure à 83,6% et/ou
- une transmittance en ligne (IT) à 4 $\mu$m supérieure à 81,8%, de préférence supérieure à 84,5%, de préférence supérieure à 86,3%, de préférence encore supérieure à 88%

les valeurs de transmittance en ligne (IT) étant mesurées sur des échantillons d'épaisseur 1,3 mm.

Dans le cas où le produit selon l'invention est un produit de YAG (Y$_3$Al$_5$O$_2$) dopé, il peut présenter :

- une transmittance en ligne (IT) à 0,3 $\mu$m, supérieure à 53,4%, de préférence supérieure à 61,7%, de préférence supérieure à 69,9%, de préférence encore supérieure à 78,1% et/ou
- une transmittance en ligne (IT) à 0,6 $\mu$m supérieure à 63,0%, de préférence supérieure à 71,4%, de préférence supérieure à 79,0%, de préférence encore supérieure à 80,6% et/ou
- une transmittance en ligne (IT) à 4 $\mu$m supérieure à 78,9%, de préférence supérieure à 81,5%, de préférence supérieure à 83,2%, de préférence encore supérieure à 84,9% et/ou
- une transmittance en ligne (IT) à 7 $\mu$m supérieure à 81,7%, de préférence supérieure à 84,3%, de préférence supérieure à 86,1%, de préférence encore supérieure à 87,5%,

les valeurs de transmittance en ligne (IT) étant mesurées sur des échantillons d'épaisseur 1,3 mm.

La plage de transparence d'un produit selon l'invention se situe avantageusement dans la gamme de longueurs d'onde comprise entre les longueurs d'ondes pour lesquelles il y a absorption par transitions électroniques (vers les faibles longueurs d'ondes, dictées par la valeur de l'énergie de gap du matériau constituant le produit) et les longueurs d'ondes pour lesquelles il y a absorption par vibrations de réseaux (phonons, vers les fortes longueurs d'onde).

Classiquement, un produit fritté se présente sous la forme d'une juxtaposition de grains.

De préférence, la taille moyenne des grains du produit selon l'invention est supérieure à 0,03 $\mu$m et/ou inférieure à 5 $\mu$m, de préférence inférieure à 2 $\mu$m, de préférence inférieure à 1,5 $\mu$m, de préférence encore inférieure à 1 $\mu$m, de préférence toujours inférieure à 0,8 $\mu$m. Les propriétés mécaniques en sont encore améliorées.

Dans un mode de réalisation préféré, la microstructure du produit selon l'invention présente une densité surfacique Fv de « gros grains » inférieure à 4 % surfacique, de préférence inférieure à 2 % surfacique, de préférence encore inférieure à 0,1% surfacique. De préférence, le produit selon l'invention ne comporte pas de grains présentant une taille supérieure à deux fois la taille moyenne des autres grains.

Avantageusement, cette caractéristique confère au produit des performances mécaniques, notamment en flexion, remarquables.

En particulier, le produit selon l'invention peut présenter une résistance mécanique en flexion 3 points, à température ambiante, supérieure à 200 MPa, de préférence supérieure à 300 MPa, de préférence encore supérieure à 400 MPa. La méthode utilisée pour mesurer cette résistance en flexion trois points est décrite dans la suite de la description.

Il peut également présenter une dureté Vickers mesurée à 20°C supérieure à 13 GPa, de préférence supérieure à 15 GPa. La méthode utilisée pour mesurer cette dureté Vickers est décrite dans la suite de la description.

L'invention concerne également un procédé de fabrication d'un produit fritté, remarquable en ce qu'on prépare une charge de départ comportant une poudre d'un matériau de structure cubique présentant un indice de réfraction inférieur à 2,75 dans le domaine de longueurs d'onde compris entre 0,2 $\mu$m et 5 $\mu$m et une poudre de dopants ou de précurseurs de dopant comprenant nécessairement l'oxyde de titane $TiO_2$ ou un précurseur de l'oxyde de titane, et au moins un dopant additionnel choisi parmi $ZrO_2$, CaO, et MgO et les précurseurs de ces dopants additionnels, dans des quantités permettant au produit fritté d'être conforme à l'invention.

De préférence, le procédé comporte une étape de mise en forme par coulage d'une barbotine obtenue à partir de ladite charge de départ.

Comme on le verra plus en détail dans la suite de la description, un produit fritté selon l'invention peut être avantageusement obtenu par la mise en oeuvre d'un procédé de fabrication selon l'invention comprenant une étape de mise en forme par coulage d'une barbotine préparée à partir :

- d'une poudre d'un matériau de structure cubique dont la taille médiane des particules élémentaires est comprise entre 0,02 et 0,5 $\mu$m, de préférence entre 0,02 et 0,25 $\mu$m, les particules élémentaires formant de préférence des agrégats de taille médiane de préférence comprise entre 0,1 et 3 $\mu$m, de préférence comprise entre 0,1 et 1 $\mu$m ;, et
- d'une poudre de dopants comportant nécessairement de l'oxyde de titane $TiO_2$ ou un précurseur d'oxyde de titane d'une part, et au moins un dopant additionnel choisi parmi $ZrO_2$, CaO, MgO et/ou au moins un précurseur de ces oxydes d'autre part, la taille médiane des particules élémentaires des particules de la poudre de dopants étant de préférence inférieure ou égale à la taille médiane des particules élémentaires de la poudre du matériau de structure cubique,

les teneurs en matériau de structure cubique et en dopants / précurseur(s) de dopant dans la barbotine étant déterminées de manière que le produit fritté obtenu soit conforme à l'invention.

Un procédé de fabrication selon l'invention particulier comprend les étapes successives suivantes :

a) préparation d'une barbotine à partir

- d'une poudre d'un matériau de structure cubique dont la taille médiane des particules élémentaires est comprise entre 0,02 et 0,5 $\mu$m, de préférence entre 0,02 et 0,25 $\mu$m, les particules élémentaires formant de préférence des agrégats de taille médiane de préférence comprise entre 0,1 et 3 $\mu$m, de préférence comprise entre 0,1 et 1 $\mu$m, et
- d'une poudre de dopants comportant nécessairement de l'oxyde de titane $TiO_2$ ou un précurseur d'oxyde de titane d'une part, et au moins un dopant additionnel choisi parmi $ZrO_2$, CaO, MgO et/ou au moins un précurseur de ces oxydes d'autre part, la taille médiane des particules élémentaires de dopant étant de préférence inférieure ou égale à la taille médiane des particules élémentaires de la poudre du matériau de structure cubique,

b) coulage de la barbotine dans un moule poreux puis séchage et démoulage de manière à obtenir une pièce crue,
c) séchage de la pièce crue démoulée,
d) déliantage à une température comprise entre 350 et 1000°C, voire inférieure ou égale à 800°C,
e) frittage, généralement à une température comprise entre 1280°C et 1800°C jusqu'à obtention d'un produit fritté dont la densité est au moins égale à 92% de la densité théorique du produit obtenu en fin d'étape f), et
f) compression isostatique à chaud, dite « HIP », généralement à une température comprise entre 1180°C et 1780°C sous une pression supérieure ou égale à 5 MPa, de préférence supérieure ou égale à 50 MPa, de manière à obtenir un produit dit « produit fritté dense ». La compression isostatique à chaud est effectuée à une température inférieure à la température de frittage. De préférence la température de la compression isostatique à chaud est inférieure de 20 à 100°C, de préférence inférieure de 50 à 100°C, à la température de frittage, de préférence toujours pendant une durée de palier supérieure à 0,5 heure, et, de préférence encore, inférieure à 15 heures.

Les teneurs en matériau de structure cubique et en dopants / précurseur(s) de dopant dans la barbotine préparée à l'étape a) étant déterminées de manière que le produit fritté obtenu à la fin de l'étape f) soit conforme à l'invention.

Les inventeurs ont découvert que pour fabriquer un produit selon l'invention, notamment selon un procédé conforme à l'invention, et de préférence en mettant en oeuvre un coulage d'une barbotine, le fait d'effectuer la compression isostatique à chaud à une température inférieure à la température de frittage diminue la densité surfacique de gros grains Fv. Grâce à cette caractéristique supplémentaire, la microstructure du produit selon l'invention peut comporter moins de 4% surfacique de gros grains (Fv), et même ne comporter sensiblement pas de gros grains. Il en résulte une résistance à la flexion remarquable.

Dans un mode de réalisation, la pression à l'étape f) est inférieure ou égale à 300 MPa.

Comme expliqué ci-dessus, le produit fritté dense obtenu en fin d'étape f) subit de préférence une étape supplémentaire g) de recuisson.

De préférence cette recuisson est effectuée sous air, à une température comprise entre 900°C et la température utilisée pour le HIP lors de l'étape f) et pendant un temps compris entre 0,5 et 24 heures de façon à diminuer le nombre de lacunes d'oxygène du produit. Avantageusement, la réduction du nombre de lacunes d'oxygène du produit en améliore la transparence, en particulier dans le domaine du visible et haut de l'ultra violet (domaine de longueurs d'onde comprises entre 0,2 et 0,4 $\mu$m).

La recuisson pourrait être également effectuée dans un autre environnement oxygéné que l'air, notamment sous oxygène. Une recuisson sous air présente cependant l'avantage d'une très grande simplicité, d'une bonne efficacité, et de conditions d'hygiène et de sécurité optimales.

Dans le mode de réalisation préféré de l'invention, le frittage est effectué sous air, la compression isostatique à chaud est effectuée sous atmosphère neutre et la recuisson est effectuée sous air.

En variante, la recuisson est effectuée pendant l'étape f). La compression isostatique à chaud est alors, de préférence, effectuée sous atmosphère d'oxygène. Bien que ce deuxième mode de réalisation ne soit pas préféré pour des raisons de sécurité, il présente l'avantage de simplifier le procédé, la recuisson étant simultanée à la densification par HIP.

De préférence, le procédé selon l'invention comporte une et de préférence plusieurs des caractéristiques optionnelles suivantes :

- préalablement à l'étape a), on modifie la taille médiane des agrégats de la poudre de matériau de structure cubique, par exemple lors d'une étape de broyage, de manière qu'elle soit comprise entre 0,1 et 3 $\mu$m, de préférence entre 0,1 et 1 $\mu$m ;
- le moule est séché préalablement au coulage de la barbotine ;
- la température pendant toute l'étape b) est comprise entre 20 et 25°C ;
- la pression de la barbotine à l'intérieur du moule est comprise entre 1 et 1,5 bar;
- l'hygrométrie de l'environnement du moule est maintenue entre 45 et 55%, de préférence entre 48 et 52%, pendant toute l'étape b).

L'invention concerne enfin l'utilisation d'un produit selon l'invention ou d'un produit fabriqué ou susceptible d'être fabriqué par un procédé selon l'invention comme fenêtre de visée en température, dôme de missile ou blindage transparent.

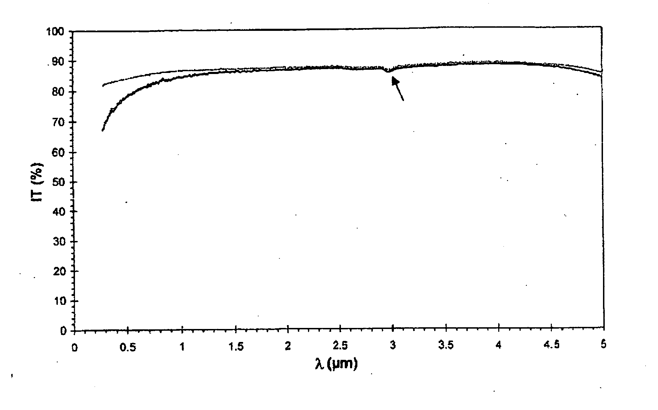

D'autres caractéristiques et avantages de l'invention apparaîtront à la lecture de la description qui va suivre et à l'examen de la figure 1 qui représente des courbes de mesures de la transmittance en ligne (« IT », en pourcentages, en ordonnées), de différents produits en fonction de la longueur d'onde du rayonnement incident (« $\lambda$ », en $\mu$m, en abscisses).

Sur cette figure, la courbe en trait plein noir représente les mesures obtenues avec un produit de spinelle pur, de taille moyenne de grains de 0,85 $\mu$m, la courbe de couleur grise représente les mesures obtenues avec un produit de spinelle dopé avec 75 ppma d'oxyde de titane ($TiO_2$) et 75 ppma de zircone ($ZrO_2$), de taille moyenne de grains de 0,75 $\mu$m (produit de l'exemple 1).

On appelle « matériau de structure cubique » un matériau présentant, pour plus de 95% de sa masse, de préférence pour plus de 97%, de préférence encore pour plus de 99%, de préférence pour sensiblement à 100%, une structure cristallographique cubique.

On appelle « densité théorique » d'un produit constitué d'un matériau de structure cubique et de dopants la densité d'une masse constituée par ce matériau de structure cubique et ces dopants et dont la porosité serait nulle.

Une « poudre » est un ensemble de particules qui elles-mêmes peuvent être des agglomérats de « particules élémentaires ».

On appelle « grains » les polyèdres cristallins constituant le produit fini.

On appelle « taille » d'un grain d'un produit massique le diamètre du disque présentant une aire équivalente à celle dudit grain dans un plan de coupe dudit produit.

On appelle « taille » d'une particule d'une poudre sa dimension moyenne mesurée par exemple à l'aide d'un granulomètre laser.

La taille moyenne d'un ensemble de grains est la moyenne arithmétique des tailles de ces grains.

On appelle « taille médiane de particules » d'un mélange de particules, généralement notée $d_{50}$, la taille divisant les particules de ce mélange en première et deuxième populations égales en nombre, ces première et deuxième populations ne comportant que des particules présentant une taille supérieure, ou inférieure respectivement, à la taille médiane.

Par « précurseur de dopant », on entend un constituant apte à fournir un dopant lors de la fabrication d'un produit fritté selon l'invention.

Un « gros grain » est un grain présentant une taille supérieure à deux fois la taille moyenne des autres grains.

"ppma" signifie conventionnellement "partie par million (million : $10^6$) atomique", "atomique" faisant référence au nombre d'atomes de l'élément associé à l'oxygène.

Toutes les valeurs de transmittance en ligne sont mesurées à une température ambiante (20°C) sur des échantillons présentant une épaisseur de 1,3 mm ou, pour les valeurs de transmittance en ligne théoriques, calculées avec une température théorique de 20°C.

On décrit à présent de manière plus détaillée un procédé comprenant les étapes a) à f) ci-dessus.

A l'étape a), on prépare une barbotine.

On désigne par « barbotine » une substance formée par une suspension de particules dans un liquide, généralement de l'eau ou un solvant organique (alcool par exemple), avec ou sans additifs tels que dispersants, défloculants, polymères, etc. De préférence, la barbotine comporte un agent liant temporaire, c'est-à-dire éliminé du produit pendant le frittage.

La fabrication d'une barbotine est une technique parfaitement connue de l'homme du métier. L'homme du métier sait comment déterminer les teneurs de matériau de structure cubique et dopants/précurseur(s) de dopants ainsi que la nature et la quantité des additifs dans la barbotine de manière à obtenir à la fin de l'étape f) un produit selon l'invention. En particulier, la détermination du domaine de stabilité de la barbotine en fonction du pH de celle-ci grâce à des mesures de potentiel Zéta pourra être utilisé, ainsi que des mesures de propriétés rhéologiques, notamment des mesures de viscosité et de seuil d'écoulement.

Typiquement, la pureté chimique de la poudre de matériau de structure cubique utilisée est supérieure à 99,97% en masse.

Avant utilisation, la taille des agrégats de la poudre de matériau de structure cubique est de préférence ajustée entre 0,1 et 3 $\mu$m, de préférence entre 0,1 et 1 $\mu$m, par exemple par broyage.

De même, la taille moyenne des grains du produit final dépend, de manière connue, des conditions de frittage, de la température de traitement HIP et de la taille médiane des particules élémentaires de la poudre de matériau de structure cubique utilisée à l'étape a). Pour que la taille moyenne de ces grains soit comprise entre 0,03 et 5 $\mu$m, la taille médiane des particules élémentaires de la poudre de matériau de structure cubique utilisée est choisie entre 0,02 et 0,5 $\mu$m. De préférence, la taille médiane des particules élémentaires de la poudre utilisée est choisie de manière que la taille moyenne des grains de produit de structure cubique du produit final soit supérieure à 0,03 $\mu$m, et inférieure à 5 $\mu$m, de préférence inférieure à 2 $\mu$m, de préférence inférieure à 1,5 $\mu$m, de préférence inférieur à 1 $\mu$m, de préférence encore inférieure à 0,8 $\mu$m.

De préférence, à l'étape a), les dopants sont ajoutés volontairement, c'est-à-dire systématiquement et méthodiquement.

De préférence, les espèces de la barbotine autre que les dopants et le matériau de structure cubique susceptibles de se retrouver dans le produit final sont des impuretés nécessairement et involontairement introduites avec les poudres de matériau de structure cubique et de dopants, ainsi que lors des différentes étapes du procédé. On considère que leurs teneurs sont insuffisantes pour modifier les propriétés avantageuses du produit selon l'invention.

La barbotine peut être fabriquée dans un récipient selon des techniques connues de l'homme du métier par mélange et homogénéisation des poudres et de la quantité souhaitée de liquide.

De préférence la barbotine comporte plus de 50% en masse de matières sèches.

De préférence encore, le récipient contenant la barbotine peut être mis, temporairement, sous une dépression de préférence supérieure à 0,5 bar pour éliminer au mieux les bulles d'air résiduelles de la barbotine.

De préférence, le moule est préalablement séché. Avantageusement, le temps de prise pendant l'étape b) de séchage est réduit.

La température pendant les opérations de coulage et de formation de la préforme est de préférence maintenue entre 20 et 25°C.

Les inventeurs ont découvert qu'un coulage d'une barbotine permet de conférer au produit de l'invention une densité supérieure à 99,9 %, voire même supérieure à 99,95% de la densité théorique après le cycle complet de fabrication et que cette densité très élevée améliore la transparence.

Après remplissage du moule, au moins une paroi poreuse du moule absorbe, au moins en partie, le liquide de la barbotine. Le remplissage complet du moule et l'évacuation peuvent être favorisés par une mise sous pression de l'intérieur du moule, par exemple par l'utilisation d'une colonne d'alimentation de hauteur adaptée à la géométrie de la pièce. De préférence, la pression de la barbotine à l'intérieur du moule est comprise entre 1 et 1,5 bar. Avantageusement, la densité de la pièce crue est ainsi augmentée et/ou cela rend la mise en forme de pièces d'épaisseur supérieure à 3 millimètres possible.

De préférence encore, l'hygrométrie de l'air environnant le moule est maintenue entre 45 et 55%, de préférence entre 48 et 52%, pendant toute l'étape b). Avantageusement, le temps de séchage est ainsi contrôlé.

A mesure que le liquide est évacué, les particules de matériau de structure cubique et de dopants s'immobilisent les unes par rapport aux autres. Cette immobilisation est appelée « prise de la préforme ». La porosité résiduelle entre les particules immobilisées autorise cependant la traversée par le liquide.

De la barbotine complémentaire est de préférence introduite dans le moule à mesure que le liquide est absorbé. Avantageusement, une partie du volume laissé vacant par le liquide est ainsi remplie par des particules de matériau de structure cubique et de dopants de la barbotine complémentaire.

Après que l'humidité de la pièce dans le moule est devenue inférieure à 2%, on considère qu'elle a subi un séchage suffisant pour assurer son intégrité et le maintien de sa géométrie lors de sa manutention après démoulage. Le moule contient alors une « préforme » et on cesse toute alimentation en barbotine complémentaire. On procède ensuite au démoulage de la préforme pour obtenir une pièce crue, ou « cru ».

A l'étape c), la pièce crue subit un séchage complémentaire, par exemple par stockage dans une étuve à température et hygrométrie contrôlées, selon des procédés classiques.

A l'étape d), la pièce crue séchée subit un déliantage, de préférence sous air, à une température comprise entre 350 et 1000°C, voire inférieure ou égale à 800°C.

De préférence, le palier de déliantage dure au moins 0,5 heure et, de préférence toujours, moins de 15 heures. Le déliantage est une opération connue en soi destinée à éliminer les produits organiques de la pièce crue.

Un déliantage à plus de 800°C est notamment utile pour éliminer des liants et/ou des lubrifiants se décomposant à hautes températures.

A l'étape e), la pièce crue séchée et déliantée, ou « ébauche », est frittée, c'est-à-dire densifiée et consolidée par un traitement thermique.

Classiquement, l'ébauche est placée dans un milieu, de préférence de l'air, dont la température varie en fonction du temps selon un cycle prédéterminé. Le traitement thermique comprend une phase de montée de la température du milieu environnant la pièce, puis une phase de maintien de la température ou "palier de frittage" à une température généralement comprise entre 1280 et 1800°C, puis enfin une phase de descente de la température. Le frittage peut être effectué dans un four classique ou bien par SPS (Spark Plasma Sintering) ou bien MWS (MicroWave Sintering).

Dans le cas particulier où le matériau de structure cubique est du spinelle MgAl$_2$O$_4$, la température de frittage est de préférence comprise entre 1400°C et 1600°C. De préférence, pour augmenter la densité du produit obtenu en fin d'étape f), on fritte, à l'étape e), jusqu'à obtention d'un produit fritté dont la densité est au moins égale à 96% de la densité théorique du produit obtenu en fin d'étape f).

Dans le cas particulier où le matériau de structure cubique est de la zircone (ZrO$_2$), la température de frittage est de préférence comprise entre 1280°C et 1400°C. De préférence, pour augmenter la densité du produit obtenu en fin d'étape f), on fritte, à l'étape e), jusqu'à obtention d'un produit fritté dont la densité est au moins égale à 94% de la densité théorique du produit obtenu en fin d'étape f).

Dans le cas particulier où le matériau de structure cubique est le YAG (Y$_3$Al$_5$O$_{12}$), la température de frittage est de préférence comprise entre 1400°C et 1800°C. De préférence, pour augmenter la densité du produit obtenu en fin d'étape f), on fritte, à l'étape e), jusqu'à obtention d'un produit fritté dont la densité est au moins égale à 92% de la densité théorique du produit obtenu en fin d'étape f).

La durée du palier de frittage est de préférence comprise entre 0 (pas de maintien en palier) et 20 heures. Dans un four classique, les vitesses de montée/descente en température sont comprises entre 50 et 900°C/heure. Pour un frittage par SPS ou MWS, elles sont comprises entre 20 et 300°C/minute.

Le frittage pourrait être effectué dans un environnement gazeux différent de l'air, par exemple sous oxygène. Cependant, cette modification de l'environnement de frittage ne modifie pas sensiblement les propriétés de la pièce obtenue à l'issue de l'étape f) de compression isostatique à chaud.

Le frittage provoque un retrait volumique, et donc une densification de la pièce. Il est possible d'obtenir une densité après frittage supérieure ou égale à 92% de la densité théorique. Cette limite est considérée par l'homme de l'art comme nécessaire pour obtenir après l'étape f) suivante (HIP) une densité supérieure à 99,9 % de la densité théorique.

A l'étape f), la pièce frittée résultant du frittage de l'ébauche subit, après refroidissement, un post-traitement thermique sous pression appelé « HIP » (de l'anglais "Hot Isostatic Pressing", c'est-à-dire pressage, ou « compression », isostatique à chaud), de préférence sous gaz neutre, par exemple sous argon.

La compression isostatique à chaud (HIP) est effectuée dans une enceinte dont la température est généralement comprise entre 1180 et 1780°C sous une pression supérieure à 5 MPa, de préférence supérieure à 50 MPa. La pression peut être inférieure à 1000 MPa, inférieure à 500 MPa, voire inférieure ou égale à 300 MPa. La température au sein de l'enceinte est de préférence inférieure à la température de frittage. De préférence, la température au sein de l'enceinte est inférieure de 20°C à 100°C à la température de frittage. De préférence encore, la température au sein de l'enceinte est inférieure de 50°C à 100°C à la température de frittage.

L'opération de compression isostatique à chaud (HIP) permet d'accroître encore la densité des pièces en éliminant la porosité résiduelle éventuellement présente après frittage, et de refermer certains défauts structuraux du type micro-fissures, améliorant ainsi la tenue mécanique des pièces en céramique.

Le déliantage et/ou le frittage peuvent être effectués sous une atmosphère différente de l'air, par exemple sous oxygène. La compression isostatique à chaud peut également être effectuée sous air ou sous une autre atmosphère oxygénée. Cependant, pour des raisons de sécurité, elle est de préférence effectuée sous atmosphère neutre, de préférence sous argon.

A l'issue de l'étape f), on obtient un produit fritté selon l'invention.

Pour des performances optimales dans des applications du produit comme fenêtre de visée en température, dôme de missile ou blindage transparent, l'étape g) de recuisson est particulièrement avantageuse..

Les rayonnements électromagnétiques peuvent être transmis, réfléchis ou diffusés. Classiquement, un matériau est dit « transparent » à un rayonnement lorsqu'il est capable de transmettre en ligne ce rayonnement, c'est-à-dire qu'il présente une transmittance en ligne (IT, ou, en anglais « In Line Transmittance ») élevée. Pour un matériau pur, lorsque les valeurs de transmittance en ligne mesurées sont proches des valeurs de transmittance en ligne théoriques calculées en tenant compte notamment de l'indice de réfraction du matériau, la diffusion est négligeable. Un matériau pur est d'autant plus « transparent » qu'il présente une valeur de transmittance en ligne IT élevée.

Dans les essais et les exemples suivants, pour évaluer la transparence, les pièces sont rectifiées et polies jusqu'à la qualité miroir. A l'issue de cette préparation, les produits présentent un Ra < 10 nm (Ra : « average Roughness ») et une épaisseur de 1,3 mm. On mesure ensuite la transmittance en ligne IT avec un spectrophotomètre dans le domaine des longueurs d'onde comprises entre 0,2 et 7 $\mu$m sur des échantillons secs, c'est-à-dire préalablement étuvés.

La transmittance en ligne théorique (IT$_{théorique}$) d'un matériau de structure cubique en fonction de la longueur d'onde du rayonnement est calculée indirectement à l'aide du logiciel OPTIMATR™ commercialisé par la société Echoscan Inc. (Niagara Falls, NY14303, USA) de la façon suivante :

Sont entrés comme données dans le logiciel les paramètres suivants : le matériau de structure cubique dont on cherche la valeur de la transmittance théorique en fonction de la longueur d'onde du rayonnement $\lambda$, le domaine de longueurs d'onde pour lequel on souhaite avoir les valeurs de la transmittance en ligne théorique, la température considérée (20°C). Le logiciel calcule l'indice de réfraction n (qui est une fonction de $\lambda$) et le coefficient d'absorption théorique, Abs (également fonction de $\lambda$). Si on appelle Ep l'épaisseur du matériau de structure cubique considéré, alors la transmittance en ligne théorique (IT$_{théorique}$), exprimée en fonction de $\lambda$, est donnée par la formule suivante :

$$IT théorique = \frac{2n}{1 + n^2} e^{-Abs.Ep}$$

La taille moyenne des grains du produit de l'invention a été mesurée par la méthode suivante :

Différents clichés du produit à caractériser sont effectués avec un microscope électronique en transmission (MET). Le nombre de clichés réalisés permet l'observation d'environ 150 grains. On appelle « n » le nombre de grains observés. A l'aide d'un logiciel de traitement d'images, comme par exemple UTHSCSA IMAGETOOL, l'aire de chaque grain est calculée. La taille du grain « i » observé (i variant de 1 à n) est définie comme étant le diamètre $d_i$ du disque présentant la même aire que celle de ce grain. Cette opération est ensuite répétée pour chaque grain observé. La taille moyenne G est la moyenne arithmétique des tailles ainsi déterminées.

La méthode utilisée pour mesurer la densité surfacique de gros grains Fv est la suivante :

Après avoir déterminé la taille « $d_i$ » de chaque grain observé et la taille moyenne G des grains du produit, il est possible d'identifier tous les gros grains présentant une taille supérieure à deux fois la taille moyenne G. On calcule ensuite l'aire totale AGG représentée par les gros grains. La « densité surfacique » de gros grains Fv est le rapport de l'aire totale de gros grains AGG divisée par l'aire totale AT, multiplié par 100.

On considère qu'il y a croissance anormale lorsque Fv est supérieure à 4%.

La résistance mécanique des produits frittés de l'invention a été mesurée en flexion trois points, à température ambiante, sur des éprouvettes de dimensions 24 mm * 4 mm * 2 mm, avec une distance entre appuis égale à 20 mm et une vitesse de traverse égale à 0,5 mm/min, au moyen d'une presse Lloyd, modèle LR150K.

La dureté a été mesurée suivant la norme NF A 95-329 de mai 1986, avec les spécificités suivantes : application d'une charge de 5,3 kilogrammes pendant 60 secondes, au moyen d'un microduromètre ZWICK, modèle 3212.

La densité des produits frittés de l'invention a été mesurée suivant la norme ISO 5017:1998, utilisant la poussée d'Archimède.

Les exemples non limitatifs suivants sont donnés dans le but d'illustrer l'invention.

Exemple comparatif 1 (hors invention) : produit de spinelle MgAl$_2$O$_4$ non dopé

Une barbotine sous la forme d'une suspension à 55% en masse de matière sèche est préparée en mélangeant dans une jarre en polyéthylène sous agitation :

- de la poudre de spinelle MgAl$_2$O$_4$ de pureté supérieure à 99,97% et dont la taille médiane des agrégats d50 est de 0,2 $\mu$m, les agrégats étant constitués de particules élémentaires ayant une taille médiane d50 de 0,05 $\mu$m,
- de l'eau et un dispersant.

La jarre en polyéthylène contient des billes en alumine 99% vol. Le temps de mélange est de 24 heures.

La barbotine ainsi préparée est désaérée et coulée dans un moule poreux préalablement étuvé pendant 24h à 40°C. Pendant le coulage et maintien dans le moule, la température est maintenue à 23°C, l'air ambiant étant à pression atmosphérique et présentant une hygrométrie de 50%.

Après un premier séchage dans le moule, puis un démoulage, la pièce crue subit un séchage complémentaire et un déliantage sous air pendant 3 heures à 480°C.

L'ébauche ainsi obtenue est ensuite frittée sous air à 1530°C pendant 3 heures. La pièce frittée subit ensuite une compression isostatique à chaud (HIP) sous argon à 1480°C pendant 15 heures et sous une pression de 200 MPa.

Le produit fritté obtenu subit enfin un traitement de recuisson, sous air à 900°C pendant 3 heures.

La taille moyenne des grains du produit obtenu était de 0,85 $\mu$m.

Exemple 1 : Produit de spinelle MgAl$_2$O$_4$ contenant 75 ppma de TiO$_2$ et 75 ppma de ZrO$_2$

Une barbotine sous la forme d'une suspension à 52,5% en masse de matière sèche est préparée en mélangeant dans une jarre en polyéthylène sous agitation :

- de la poudre de spinelle MgAl$_2$O$_4$ de pureté supérieure à 99,97% et dont la taille médiane des agrégats d50 est de 0,2 $\mu$m, les agrégats étant constitués de particules élémentaires ayant une taille médiane d50 de 0,05 $\mu$m, et
- de la poudre d'oxyde de zirconium (ZrO$_2$ stabilisée avec 3 % molaire d'oxyde d'yttrium constituée de particules élémentaires de d50 égal à 0,05 $\mu$m, introduite à hauteur de 75 ppm atomique (ppma),
- de la poudre d'oxyde de titane (TiO$_2$) sous forme rutile, constituée de particules élémentaires de d50 égal à 10 $\mu$m, introduite à hauteur de 75 ppm atomique (ppma), et
- de l'eau et un dispersant.

La jarre en polyéthylène contient des billes en alumine 99% vol. Le temps de mélange est de 24 heures

La barbotine ainsi préparée est désaérée et coulée dans un moule poreux préalablement étuvé pendant 24h à 40°C. Pendant le coulage et maintien dans le moule, la température est maintenue à 23°C, l'air ambiant étant à pression atmosphérique et présentant une hygrométrie de 50%.

Après un premier séchage dans le moule, puis un démoulage, la pièce crue subit un séchage complémentaire et un déliantage sous air pendant 3 heures à 480°C.

L'ébauche ainsi obtenue est ensuite frittée sous air à 1530°C pendant 3 heures. La pièce frittée, de densité supérieure à 96% de la densité théorique, subit ensuite une compression isostatique à chaud (HIP) sous argon à 1480°C pendant 15 heures sous une pression de 200 MPa.

Le produit fritté obtenu subit enfin un traitement de recuisson, sous air à 900°C pendant 3 heures de façon à diminuer le nombre de lacunes d'oxygène et à améliorer sa transparence, notamment dans le domaine du visible et du haut ultra violet.

La taille moyenne des grains du produit obtenu était de 0,75 $\mu$m.

Exemple comparatif 2 (hors invention) : produit de YAG (Y$_3$Al$_5$O$_{12}$) non dopé

Une barbotine sous la forme d'une suspension à 70% en masse de matière sèche est préparée en mélangeant dans une jarre en polyéthylène sous agitation :

- de la poudre de YAG (Y$_3$Al$_5$O$_{12}$) de pureté chimique supérieure à 99,95% et dont la taille des agrégats est comprise entre 5 $\mu$m et 200 $\mu$m, les agrégats étant constitués de particules élémentaires ayant une taille médiane d50 de 0,3 $\mu$m,
- de l'eau et un dispersant.

La jarre en polyéthylène contient des billes en alumine 99% vol. Le temps de mélange est de 24 heures.

La barbotine ainsi préparée est désaérée et coulée dans un moule poreux préalablement étuvé pendant 24h à 40°C. Pendant le coulage et maintien dans le moule, la température est maintenue à 23°C, l'air ambiant étant à pression atmosphérique et présentant une hygrométrie de 50%.

Après un premier séchage dans le moule, puis un démoulage, la pièce crue subit un séchage complémentaire et un déliantage sous air pendant 3 heures à 650°C.

L'ébauche ainsi obtenue est ensuite frittée sous air à 1600°C pendant 2 heures. La pièce frittée subit ensuite une compression isostatique à chaud (HIP) sous argon à 1550°C pendant 15 heures et sous une pression de 200 MPa.

Le produit fritté obtenu subit enfin un traitement de recuisson, sous air à 900°C pendant 3 heures.

La taille moyenne des grains du produit obtenu était de 0,9 $\mu$m.

Exemple 2 : Produit de YAG ($Y_3Al_5O_{12}$) contenant 75 ppma de $TiO_2$ et 75 ppma de CaO

Un mélange de $CaCO_3$ et de poudre de $TiO_2$ sous la forme rutile est broyé dans un broyeur à jarre contenant des billes d'alumine 99%vol, pendant le temps nécessaire pour atteindre une taille moyenne de particules élémentaires inférieure ou égale à la taille moyenne des particules élémentaires de la poudre de YAG ($Y_3Al_5O_{12}$) entrant également dans la composition du produit.

Une barbotine sous la forme d'une suspension à 70% en masse de matière sèche est préparée en mélangeant dans un broyeur à jarre un dispersant, un liant organique, de la poudre de YAG ($Y_3Al_5O_{12}$) de pureté chimique supérieure à 99,95% et dont la taille des agrégats est comprise entre 5 $\mu$m et 200 $\mu$m, les agrégats étant constitués de particules élémentaires ayant une taille médiane d50 de 0,3 $\mu$m, et le mélange de $CaCO_3+TiO_2$ broyé, introduit de façon à ce que, dans le produit final, les quantités de CaO et de $TiO_2$ soient de 75 ppm atomique chacune, pour un total en dopant de 150 ppm atomique.

La jarre en polyéthylène contient des billes en alumine 99% vol. Le temps de mélange est de 24 heures.

La barbotine ainsi préparée est désaérée et coulée dans un moule poreux préalablement étuvé pendant 24h à 40°C. Pendant le coulage et maintien dans le moule, la température est maintenue à 23°C, l'air ambiant étant à pression atmosphérique et présentant une hygrométrie de 50%.

Après un premier séchage dans le moule, puis un démoulage, la pièce crue subit un séchage complémentaire et un déliantage sous air pendant 3 heures à 650°C.

L'ébauche ainsi obtenue est ensuite frittée sous air à 1600°C pendant 2 heures. La pièce frittée, de densité supérieure à 92% de la densité théorique, subit ensuite une compression isostatique à chaud (HIP) sous argon à 1550°C pendant 15 heures sous une pression de 200 MPa.

Le produit fritté obtenu subit enfin un traitement de recuisson, sous air à 900°C pendant 3 heures de façon à diminuer le nombre de lacunes d'oxygène et à améliorer sa transparence, notamment dans le domaine du visible et du haut ultra violet.

La taille moyenne des grains du produit obtenu était de 0,8 $\mu$m.

Le tableau 1 suivant fournit les résultats des tests effectués sur les produits de l'exemple comparatif 1, de l'exemple 1, de l'exemple comparatif 2, de l'exemple 2 et sur du saphir (orientation 0°).

Tableau 1

| | Saphir (orientation 0°) | Ex. comp. 1 | Ex. 1 | Ex. comp. 2 | Ex. 2 |
|---|---|---|---|---|---|
| Taille moyenne de grains ($\mu$m) | - | 0,85 | 0,75 | 0,9 | 0,8 |
| Densité (% par rapport à densité théorique) | - | > 99,9 | > 99,9 | > 99,9 | > 99,9 |
| Croissance anormale de grains | - | non | non | non | non |
| Résistance mécanique à température ambiante mesurée en flexion 3 points (en MPa) | | 240 | 330 | 320 | 440 |
| Dureté à température ambiante (en GPa) | 19 | 16,2 | 16,4 | n.d. | n.d. |
| IT(%) à 0,3 $\mu$m | 82 | 68,1 | 82,3 | 64,1 | 79,6 |
| IT(%) à 0,6 $\mu$m | 83,3 | 81,1 | 84,8 | 76,4 | 82,7 |
| IT(%) à 4 $\mu$m | 86,1 | 88 | 88,6 | 84,9 | 85,3 |
| IT(%) à 7 $\mu$m | 0 | 0 | 0 | 87 | 87,2 |
| « n.d. » signifie « non déterminé » | | | | | |

Il apparaît que la résistance mécanique à température ambiante mesurée en flexion des produits frittés selon l'invention est très satisfaisante, étant largement supérieure à celle des produits des exemples comparatifs correspondants.

La figure 1 représente les mesures de la transmittance en ligne des produits de l'exemple comparatif 1 et de l'exemple 1 en fonction de la longueur d'onde du rayonnement incident, comprise entre 0,2 et 5 $\mu$m.

La figure 1 confirme la transparence remarquable du produit 1 selon l'invention, aussi bien dans les longueurs d'onde de la lumière visible (0,4 à 0,8 $\mu$m) que dans celles de l'infrarouge (0,8 à 5 $\mu$m) mais également dans le haut ultra violet (0,2 à 0,4 $\mu$m). Les valeurs de transmittance en ligne IT du produit 1 selon l'invention sont également supérieures à celles du saphir pour les longueurs d'onde de 0,6 et 4 $\mu$m, comme indiqué dans le tableau 1.

Le produit de l'exemple 2 selon l'invention présente une transmittance en ligne IT supérieure à celle du produit de l'exemple comparatif 2 pour les longueurs d'onde de 0,3, 0,6, 4 et 7 $\mu$m. Le produit de l'exemple 2 selon l'invention présente également une transmittance en ligne IT pour la longueur d'onde de 7 $\mu$m remarquable par rapport à celle du saphir.

Par ailleurs, les courbes de transmittance en ligne IT du produit de l'exemple 1 et du produit de l'exemple comparatif 1 présentent une absorption spécifique du rayonnement incident pour des longueurs d'onde comprises entre 2,8 et 3,1 $\mu$m. Cette absorption, qui se traduit par un affaissement local (flèche) de la courbe sur la figure 1, est considérée par les inventeurs comme une signature du procédé de fabrication utilisé. Les inventeurs pensent que ce phénomène est lié à la présence de groupements OH résiduels.

Comme cela apparaît clairement à présent, l'invention permet de fournir des produits denses, à grains fins, durs, résistant mécaniquement, notamment en flexion, et possédant une très bonne transparence, notamment dans les domaines de l'infrarouge, du visible et même du haut ultra violet.

Bien entendu, la présente invention n'est pas limitée aux modes de réalisation décrits fournis à titre d'exemples illustratifs et non limitatifs.

**Revendications**

1. Produit fritté comportant :

   - plus de 99,5 %, en pourcentage massique sur la base des oxydes, d'un matériau, appelé « matériau de structure cubique », présentant, pour plus de 95% de sa masse, une structure cristallographique cubique, et présentant un indice de réfraction inférieur à 2,75 dans le domaine de longueurs d'onde compris entre 0,2 $\mu$m et 5 $\mu$m, et
   - plus de 50 ppma et moins de 500 ppma de dopants, ces dopants comprenant nécessairement l'oxyde de titane $TiO_2$ et au moins un dopant additionnel choisi parmi $ZrO_2$ CaO, et MgO, ledit au moins un dopant additionnel étant différent du ou des oxyde(s) constituant ledit matériau de structure cubique, MgO pouvant cependant être un dopant additionnel lorsque le matériau de structure cubique est du spinelle $MgAl_2O_4$.

2. Produit selon la revendication précédente dans lequel le matériau de structure cubique est choisi parmi le spinelle $MgAl_2O_4$, la zircone ($ZrO_2$), et le YAG ($Y_3Al_5O_{12}$).

3. Produit selon la revendication précédente dans lequel la zircone ($ZrO_2$) est stabilisée sous forme cubique par de l'oxyde d'yttrium ($Y_2O_3$).

4. Produit selon l'une quelconque des revendications précédentes dont le matériau de structure cubique présente, pour plus de 99% de sa masse, une structure cristallographique cubique.

5. Produit selon l'une quelconque des revendications précédentes comportant plus de 100 ppma de dopants.

6. Produit fritté selon la revendication précédente comportant moins de 200 ppma de dopants.

7. Produit de structure cubique fritté selon l'une quelconque des revendications précédentes dans lequel la teneur en $TiO_2$ est supérieure à 25 ppma et inférieure à 300 ppma.

8. Produit selon l'une quelconque des revendications précédentes, dans lequel la taille moyenne des grains est supérieure à 0,03 $\mu$m et inférieure à 5 $\mu$m.

9. Produit selon la revendication précédente dans lequel la taille moyenne des grains est inférieure à 0,8 $\mu$m.

**10.** Produit fritté selon l'une quelconque des revendications précédentes, présentant une densité supérieure à 99,9% de la densité théorique du mélange du matériau de structure cubique et des dopants.

**11.** Produit selon l'une quelconque des revendications précédentes, dans lequel

- le dopant additionnel est $ZrO_2$ le rapport atomique $TiO_2/ZrO_2$ étant compris entre 5/95 et 95/5 ou entre 40/60 et 60/40, ou
- le dopant additionnel est CaO, le rapport atomique $TiO_2/CaO$ étant compris entre 45/55 et 55/45 ou entre 37/63 et 63/37, ou
- le dopant additionnel est MgO, le rapport atomique $TiO_2/MgO$ étant compris entre 5/95 et 95/5 ou entre 40/60 et 60/40.

**12.** Produit selon l'une quelconque des revendications précédentes présentant une densité surfacique (Fv) de gros grains inférieure à 4 % surfacique.

**13.** Procédé de fabrication comprenant les étapes successives suivantes :

a) préparation d'une barbotine à partir

- d'une poudre de matériau de structure cubique présentant un indice de réfraction inférieur à 2,75 dans le domaine de longueurs d'onde compris entre 0,2 $\mu$m et 5 $\mu$m et dont la taille médiane des particules élémentaires est comprise entre 0,02 et 0,5 $\mu$m, et
- d'une poudre de dopants ou de précurseurs de dopant comportant nécessairement de l'oxyde de titane $TiO_2$ ou un précurseur d'oxyde de titane d'une part, et au moins un dopant additionnel choisi parmi $ZrO_2$, CaO, MgO et/ou au moins un précurseur de ces oxydes d'autre part, la taille médiane des particules élémentaires de dopant étant inférieure ou égale à la taille médiane des particules élémentaires de la poudre du matériau de structure cubique,

b) coulage de la barbotine dans un moule poreux puis séchage et démoulage de manière à obtenir une pièce crue,
c) séchage de la pièce crue démoulée,
d) déliantage à une température comprise entre 350 et 1000°C,
e) frittage à une température comprise entre 1280°C et 1800°C jusqu'à obtention d'un produit fritté dont la densité est au moins égale à 92% de la densité théorique du produit obtenu en fin d'étape f), et
f) compression isostatique à chaud, dite « HIP », à une température comprise entre 1180°C et 1780°C sous une pression supérieure ou égale à 5 MPa,

les teneurs en matériau de structure cubique et en dopants / précurseur(s) de dopant dans la barbotine préparée à l'étape a) étant déterminées de manière que le produit fritté obtenu à la fin de l'étape f) soit conforme à l'une quelconque des revendications précédentes.

**14.** Procédé de fabrication selon la revendication précédente, comportant une étape g) de recuisson à une température comprise entre 900°C et la température utilisée lors de l'étape f) et pendant une durée comprise entre 0,5 et 24 heures de manière à diminuer le nombre de lacunes d'oxygène du produit.

**15.** Procédé de fabrication selon l'une quelconque des deux revendications immédiatement précédentes, la compression isostatique à chaud étant effectuée à une température inférieure de 20 à 100°C à la température de frittage.

**16.** Utilisation d'un produit selon l'une quelconque des revendications 1 à 13 ou d'un produit fabriqué ou susceptible d'être fabriqué par un procédé selon l'une quelconque des revendications 14 à 16 comme fenêtre de visée en température, dôme de missile ou dans un blindage transparent.

**Claims**

**1.** A sintered product comprising:

- in mass percent based on oxides, more than 99.5% of a material known as a material with a cubic structure, having a cubic crystallographic structure for more than 95% of the mass thereof, and having a refractive index of less than 2.75 in the wavelength range between 0.2 $\mu$m and 5 $\mu$m, and
- more than 50 ppma and less that 500 ppma of dopants, which must contain titanium oxide $TiO_2$ and at least one additional dopant selected from $ZrO_2$, CaO and MgO, in which said at least one additional dopant is different from the oxide(s) forming the material with a cubic structure, but can be MgO when the material which has a cubic structure is spinel $MgAl_2O_4$.

2. The product as claimed in the preceding claim, in which the material with a cubic structure is selected from spinel $MgAl_2O_4$, zirconia ($ZrO_2$), and YAG ($Y_3Al_5O_{12}$).

3. The product as claimed in the preceding claim, in which the zirconia ($ZrO_2$) is stabilized in cubic form by yttrium oxide ($Y_2O_3$).

4. The product as claimed in any one of the preceding claims, in which the material with a cubic structure has a cubic crystallographic structure for more than 99% of its mass.

5. The product as claimed in any one of the preceding claims, comprising more than 100 ppma of dopants.

6. The sintered product as claimed in the preceding claim, comprising less than 200 ppma of dopants.

7. The sintered product with a cubic structure as claimed in any one of the preceding claims, in which the $TiO_2$ content is higher than 25 ppma and lower than 300 ppma.

8. The product as claimed in any one of the preceding claims, in which the mean grain size is higher than 0.03 $\mu$m and lower than 5 $\mu$m.

9. The product as claimed in the preceding claim, in which the mean grain size is lower than 0.8 $\mu$m.

10. The sintered product as claimed in any one of the preceding claims, having a density higher than 99.9% of the theoretical density of the mixture of the material with a cubic structure and the dopants.

11. The product as claimed in any one of the preceding claims, in which the additional dopant is $ZrO_2$, the $TiO_2/ZrO_2$ atomic ratio being between 5/95 and 95/5 or between 40/60 and 60/40 or in which the additional dopant is CaO, the $TiO_2/CaO$ atomic ratio being between 45/55 and 55/45 or between 37/63 and 63/37 or in which the additional dopant is MgO, the $TiO_2/MgO$ atomic ratio being between 5/95 and 95/5 or between 40/60 and 60/40.

12. The product as claimed in any one of the preceding claims, having a surface density (Fv) of large grains lower than 4% per unit area.

13. The fabrication method comprising the following successive steps:

a) preparation of a slurry from

- a powder of material with a cubic structure having a refractive index lower than 2.75 in the wavelength range between 0.2 $\mu$m and 5 $\mu$m and a median elementary particle size of between 0.02 and 0.5 $\mu$m, and
- a powder of dopants or of precursors of dopants necessarily comprising titanium oxide $TiO_2$ or a titanium oxide precursor on the one hand, and at least one additional dopant selected from $ZrO_2$, CaO, MgO and/or a precursor of these oxides on the other hand, the median elementary particle size of the dopant being lower than or equal to the median elementary particle size of the powder of material with a cubic structure,

b) casting of the slurry in a porous mold followed by drying and stripping in order to obtain a green part,
c) drying of the stripped green part,
d) binder removal at a temperature between 350 and 1000°C,
e) sintering at a temperature between 1280°C and 1800°C until a sintered product is obtained having a density at least equal to 92% of the theoretical density of the product obtained at the end of step f), and
f) hot isostatic pressing (HIP) at a temperature between 1180°C and 1780°C under a pressure equal to or higher than 5 MPa,

the contents of material with a cubic structure and of dopants/dopant precursor(s) in the slurry prepared in step a) being determined so that the sintered product obtained at the end of step f) conforms to any one of the preceding claims.

14. The fabrication method as claimed in the preceding claim, comprising a step g) of annealing at a temperature between 900°C and the temperature used in step f) and for a period of between 0.5 and 24 hours in order to reduce the number of oxygen vacancies of the product.

15. The fabrication method according to any one of the two immediately preceding claims, the hot isostatic pressing being carried out at a temperature 20 to 100°C lower than the sintering temperature.

16. The use of a product according to any one of claims 1 to 13 or of a product fabricated or producible by a method as claimed in any one of claims 14 to 16, as a temperature viewing window, missile dome, or in a transparent armor.

**Patentansprüche**

1. Sinterprodukt mit folgender Zusammensetzung:

   - mehr als 99,5 Massenprozent auf der Basis von Oxyden eines Materials, genannt "Material mit kubischer Struktur" welches für mehr als 95% seiner Masse eine kubische kristallographische Struktur aufweist sowie einen Brechungsindex, der kleiner ist als 2,75 in einem Wellenlängenbereich zwischen $0,2\mu m$ und $5\mu m$, und
   - mehr als 50 ppma und weniger als 500 ppma an Dotiermaterialien, wobei diese Dotiermaterialien notwendigerweise Titanoxyd $TiO_2$ aufweisen sowie mindestens ein zusätzliches Dotiermaterial, welches ausgewählt wird aus $ZrO_2$, CaO und MgO, wobei das mindestens eine zusätzliche Dotiermaterial unterschiedlich zu dem oder den Oxiden ist, die das besagte Material mit kubischer Struktur bilden, wobei MgO indessen ein zusätzliches Dotiermaterial sein kann, wenn das Material mit kubischer Struktur ein Spinell $MgAl_2O_4$ ist.

2. Produkt nach dem vorhergehenden Anspruch, in welchem das Material mit der kubischen Struktur ausgewählt ist aus dem Spinell $MgAl_2O_4$, dem Zirkon ($ZrO_2$), und dem YAG ($Y_3Al_5O_{12}$).

3. Produkt nach dem vorhergehenden Anspruch, in dem das Zirkon ($ZrO_2$) durch das Ytriumoxyd ($Y_2O_3$) in die kubische Form stabilisiert ist.

4. Produkt nach einem der vorhergehenden Ansprüche, bei dem das Material mit der kubischen Struktur für mehr als 99% seiner Masse eine kristallographisch kubische Struktur aufweist.

5. Produkt nach einem der vorhergehenden Ansprüche, welches mehr als 100 ppma an Dotiermaterialien beinhaltet.

6. Sinterprodukt nach dem vorhergehenden Anspruch, welches weniger als 200 ppma an Dotiermaterialien beinhaltet.

7. Sinterprodukt mit kubischer Struktur nach einem der vorhergehenden Ansprüche, in welchem der Gehalt an $TiO_2$ höher als 25 ppma und weniger als 300 ppma ist.

8. Produkt nach einem der vorhergehenden Ansprüche, in welchem die mittlere Korngröße größer als $0,03\ \mu m$ und kleiner als $5\ \mu m$ ist.

9. Produkt nach dem vorhergehenden Anspruch, in welchem die mittlere Korngröße kleiner als $0,8\mu m$ ist.

10. Sinterprodukt nach einem der vorhergehenden Ansprüche, welches eine Dichte von mehr als 99,9% der theoretischen Dichte der Mischung aus dem Material mit der kubischen Struktur und den Dotiermaterialien aufweist.

11. Produkt nach einem der vorhergehenden Ansprüche, in welchem

   - das zusätzliche Dotiermaterial $ZrO_2$ ist, wobei das atomare Verhältnis $TiO_2/ZrO_2$ zwischen 5/95 und 95/5 oder zwischen 40/60 und 60/40 liegt, oder
   - das zusätzliche Dotiermaterial CaO ist, wobei das atomare Verhältnis $TiO_2/CaO$ zwischen 45/55 und 55/45 oder zwischen 37/63 und 63/37 liegt, oder
   - das zusätzliche Dotiermaterial MgO ist, wobei das atomare Verhältnis $TiO_2/MgO$ zwischen 5/95 und 95/5 oder zwischen 40/60 und 60/40 liegt.

12. Produkt nach einem der vorhergehenden Ansprüche, welches eine Oberflächendichte (Fv) von einer Mehrzahl von Körnern aufweist, die kleiner als 4% der Oberfläche ist.

13. Herstellungsverfahren mit den folgenden aufeinanderfolgenden Schritten:

a) Zubereitung eines Schlickers ausgehend von

- einem Pulver aus einem Material mit kubischer Struktur, welches einen Brechungsindex aufweist, der kleiner als 2,75 im Wellenlängenbereich zwischen 0,2pm und 5$\mu$m ist und bei dem die mittlere Größe der elementaren Teilchen zwischen 0,02 und 0,5. $\mu$m liegt, und
- einem Pulver aus Dotiermaterialien oder Vorläufern von Dotiermaterial, welche notwendigerweise Titanoxyd $TiO_2$ oder einen Vorläufer von Titanoxyd einerseits und mindestens ein.zusätzliches Dotiermaterial, welches ausgewählt ist aus $ZrO_2$, CaO, MgO und/oder wenigstens einen Vorläufer dieser Oxyde andererseits aufweist, wobei die mittlere Größe der elementaren Teilchen des Dotiermaterials kleiner oder gleich der mittleren Größe der elementaren Teilchen des Pulvers aus dem Material mit der kubischen Struktur ist,

b) Gießen des Schlickers in eine poröse Form mit nachfolgender Trocknung und Endformung derart, dass ein Rohteil erhalten wird,
c) Trocknung des entformten Rohteils,
d) Entbinderung bei einer Temperatur zwischen 350 und 1000°C,
e) Sinterung bei einer Temperatur zwischen 1280°C und 1800°C bis ein Sinterprodukt erhalten wird, dessen Dichte mindestens gleich 92% der theoretischen Dichte eines im Endschritt f) erhaltenen Produktes ist, und
f) isostatische Wärmekompression, genannt "HIP" bei einer Temperatur zwischen 1180°C und 1780°C unter einem Druck, der größer oder gleich 5 MPa ist, wobei der Gehalt an Material von kubischer Struktur und an Dotiermaterialien/Vorläufern von Dotiermaterialien in dem in Schritt a) bereiteten Schlicker derart begrenzt ist, dass das erhaltene Sinterprodukt im Endschritt f) mit einem der vorhergehenden Ansprüche konform geht.

14. Herstellungsverfahren nach dem vorhergehenden Anspruch, welches einen Schritt g) aufweist, in dem das Produkt bei einer Temperatur zwischen 900°C und der im Schritt f) benutzten Temperatur gebacken wird und zwar während eines Zeitraums zwischen 0,5 und 24 Stunden, um die Anzahl der Sauerstofflücken des Produktes zu verringern.

15. Herstellungsprozess nach einem der beiden vorhergehenden Ansprüche, wobei die isostatische Wärmekompression bei einer Temperatur ausgeführt wird, die kleiner als 20 bis 100°C bei der Sintertemperatur ist.

16. Verwendung eines Produkts nach einem der vorhergehenden Ansprüche 1 bis 13 oder eines gefertigten Produktes oder welches geeignet ist, nach einem Verfahren nach einem der Ansprüche 14 bis 16 gefertigt zu werden wie ein Temperaturbeobachtungsfenster, eine Flugkörperkuppel oder in einer transparenten Panzerung.

## RÉFÉRENCES CITÉES DANS LA DESCRIPTION

**Documents brevets cités dans la description**

- EP 1053983 A
- WO 2004007398 A
- FR 2886289
- US 3767745 A
- US 5001093 A
- US 5152940 A
- US 5004712 A
- US 20040159984 A
- US 4115134 A
- US 4166831 A
- US 4098612 A
- US 5308809 A
- EP 1557402 A

**Littérature non-brevet citée dans la description**

- Transparent TiO2-Y2O3-ZrO2 ceramics. *Advances in ceramics, vol 24, science and technology of zirconia III,* 1988, vol. 24, 287-291